# EUROPEAN PATENT SPECIFICATION

(11) **EP 2 827 276 B1**
(45) Date of publication and mention of the grant of the patent: **03.07.2019**
(21) Application number: 13306038.4
(22) Date of filing: 19.07.2013
(51) Int. Cl.: G06F 21/60, G06F 21/86

(54) **Secure data processing**
Sichere Datenverarbeitung
Traitement de données sécurisé

(43) Date of publication of application: 21.01.2015
(73) Proprietor: Alcatel Lucent, 91620 Nozay (FR)
(72) Inventor: Jul, Eric, Dublin, 15 (IE); Cucinotta, Tommaso, Dublin, 15 (IE); Cherubini, Davide, Dublin, 15 (IE)
(74) Representative: Leppard, Andrew John

(56) References cited:
- EP-A1- 1 370 084
- US-A- 5 915 025
- US-A1- 2007 199 046
- US-B1- 6 836 847

## Description

### FIELD OF THE INVENTION

The present invention relates to a secure data processing apparatus, a method and a computer program product.

### BACKGROUND

Secure data processing is known. Secure data processing is particularly important in distributed computing architectures, such as those used by cloud computing. When performing such cloud computing, any code sent to a remote computer in the cloud and any user data sent to be remotely processed, as well as the data output from the remote data processing operations typically needs to remain confidential.

US6836847 discloses software protection for single and multiple microprocessor systems. It provides an MCM (multi component module) that is tamper resistant and which has a crypto processor for decrypting received data, which can then be processed safely on the module. The data product resulting from processing within the protecting equipment may be encrypted so as to be sent safely to external locations where it may be stored or decrypted for further use. This idea could be used to permit system operation of WANs and LANs where different levels of security or classification could be used by providing different keys assigned to teach device that has its own MCM.

EP1370084 discloses a system and method for protecting security registers among data processors. In this system the security registers can only be accessed through a secure data bus and a secure processor.

US5915025 discloses an enhanced encryption system in which data and software are encrypted using keys generated according to an attribute of the data. This enhances the level of encryption security.

US2007/199046 discloses a PDA with a non-secure processor and a secure processor. A cryptographic engine is provided for encrypting and decrypting data sent between the two, a secure bus sending data from the cryptographic engine to the secure processor and an untrusted bus sending data between the cryptographic engine and the non-secure processor.

Although various techniques exist to try to protect the confidentiality of such data, they each have their own shortcomings.

Accordingly, it is desired to provide an improved technique for performing secure data processing.

### SUMMARY

According to a first aspect, there is provided a secure data processing apparatus operable to securely process user data provided by a user, the secure data processing apparatus comprising: a trusted domain comprising a trusted bus coupled with a trusted data processing apparatus operable to process incoming user data received over the trusted bus and to generate outgoing user data; a trusted domain controller comprising: cryptographic logic coupling the trusted bus with an untrusted bus of an untrusted domain, the cryptographic logic being operable to ensure that encrypted incoming user data received over the untrusted bus is decrypted and provided over the trusted bus as the incoming user data and to ensure that outgoing user data is encrypted and provided over the untrusted bus as encrypted outgoing data; and metadata logic coupling the trusted bus with the untrusted bus, the metadata logic being operable to provide metadata associated with encrypted data transfers provided over the untrusted bus.

The first aspect recognises that it is possible to provide a mechanism to allow users to hand over their computations and data to a remote untrustworthy environment, such as a cloud provider, in a confidential way by the creation of an isolated execution environment, called a Confidential Domain of Execution (CDE), in a potentially untrustworthy execution environment, with the capability to establish a confidential communication channel with a remote user, allowing the user to provide both data and software to be processed within the environment, and without any possibility for such software to disclose any sensitive data in clear-text to the outside world. The CDE forcibly encrypts any data that is provided as output, and decrypts any data that is provided as input. This is achieved by letting any input/output data flow to/from the CDE towards the outside environment go through a Trusted Cryptographic Unit (TCU) that performs the mandated encryption operations.

The secure channel is typically realized in terms of a symmetric encryption key that the user provides when initializing the CDE environment for operation, where provisioning of the key was made confidential on its own by prescribing that the user encrypts the initialization message, including the key, using a asymmetric public encryption key for the CDE, published and certified by a proper Certification Authority (CA).

The first aspect also recognises that such CDEs have limitations, particularly for multi-key CDEs operating in cloud environments. Cloud applications capable of accessing huge amounts of data are becoming increasingly used and popular, and cloud computing promises to become an enabling technology in the context of Big Data applications, where the need for scaling out applications over more and more physical machines matches very well with the ideal infinite provisioning of resources of a cloud provider. In such contexts, being capable of accessing specific data elements within a sea of available information becomes critical for the correct and prompt operation of the application.

While the CDE approach provides the user with a confidential execution environment on remote machines, in the general context of cloud computing, the CDE approach typically requires that any input/output (I/O) operation to/from a CDE environment is kept confidential, and so the surrounding environment is not allowed to know anything about such communications. Unfortunately, this restricts also the I/O capabilities of a CDE, to those cases in which the surrounding environment is already aware of how to exactly handle/ move data coming from or going towards a CDE. For example, a CDE can read a file that has been encrypted with the user key from a disk at the data centre only if which file to read and where the file is located is already known to the surrounding environment; otherwise it cannot find the file and transfer it towards the CDE.

However, if a cloud application running within a CDE has to handle large amounts of data, such as access to a database, it can happen that only a portion of that data needs to be accessed from within the CDE, and that the portion of data to access is decided through some computations internal to the CDE itself. Therefore, the first aspect recognises that a mechanism is needed to allow a CDE to associate with an encrypted data transfer with the outside world additional metadata that is useful for instructing the outside world on how to handle the transfer and what to transfer.

Accordingly a secure data processing apparatus may be provided. The secure data processing apparatus may be for securely processing user data provided by a user. The secure data processing apparatus may comprise a trusted domain. The trusted domain may comprises a trusted bus coupled with a trusted data processing apparatus which processes incoming user data received over the trusted bus and which generates outgoing user data. The trusted domain may also comprise a trusted domain controller comprising cryptographic logic coupling the trusted bus with an untrusted bus of an untrusted domain. The cryptographic logic may ensure that encrypted incoming user data received over the untrusted bus is decrypted and provided over the trusted bus as the incoming user data and may ensure that outgoing user data is encrypted and provided over the untrusted bus as encrypted outgoing data. The trusted domain controller may also comprise metadata logic coupling the trusted bus with the untrusted bus. The metadata logic may provide metadata associated with encrypted data transfers provided over the untrusted bus. Providing metadata enables the trusted domain controller interact with the untrusted domain to perform data transfers with the untrusted domain without the untrusted domain having any knowledge of the content of the encrypted data being transferred. This enables the trusted domain to access data stored outside of the trusted domain without compromising the integrity of the encrypted data itself. Enabling the data to be stored elsewhere reduces the storage requirements on the trusted domain and enables different trusted domains to operate on the same encrypted data.

In one embodiment, the metadata indicates a request to receive encrypted data over the untrusted bus. Hence, the trusted domain may initiate requests to receive required encrypted data.

In one embodiment, the metadata indicates a request to store encrypted data provided over the untrusted bus. Hence, the trusted domain may initiate requests to store encrypted data outside of the trusted domain.

In one embodiment, the request indicates a location of the encrypted data. This could specify an address or other location of the data.

In one embodiment, the request indicates a location of a portion of the encrypted data. Hence, just some or a subset of the encrypted data may be specified.

In one embodiment, the request indicates a block number of storage storing the encrypted data.

In one embodiment, the request indicates a file name of the encrypted data.

In one embodiment, the request indicates a file name of a portion of the encrypted data.

In one embodiment, the request is derivable from the metadata. For example, a trusted domain may be configured on initialisation or another event to perform pre-arranged data transactions such as access specified data stored at a particular location and/or send specified data stored to a particular location, or some combination of these.

In one embodiment, the metadata is signed. The metadata maybe signed digitally.

In one embodiment, the metadata comprises plain text.

In one embodiment, the metadata logic comprises a set of metadata registers operable to transfer the metadata between the trusted data processing apparatus and the untrusted bus.

In one embodiment, the metadata registers are operable to transfer the metadata having less than a specified size. This helps to limit the amount of metadata leaving the trusted domain.

In one embodiment, the metadata registers are operable to throttle transfer of the metadata to less than a specified rate. Again, this helps to limit the amount of metadata leaving the trusted domain.

In one embodiment, the set of metadata registers comprises an output set of metadata registers operable to store metadata associated the request and an input set of metadata registers operable to store metadata associated with encrypted data provided over the untrusted bus in response to the request.

In one embodiment, the output set of metadata registers are operable to store metadata associated a plurality of the requests and the input set of metadata registers are operable to store metadata associated with encrypted data provided over the untrusted bus in response to the requests.

In one embodiment, the trusted domain controller is operable to authenticate encrypted data provided over the untrusted bus in response to the request.

In one embodiment, the trusted domain controller is operable to authenticate encrypted data provided over the untrusted bus in response to the request using the metadata.

According to a second aspect, there is provided a secure data processing method for securely processing user data provided by a user, the method comprising: processing incoming user data received over the trusted bus and generating outgoing user data; coupling the trusted bus with an untrusted bus of an untrusted domain using a trusted domain controller to ensure that encrypted incoming user data received over the untrusted bus is decrypted and provided over the trusted bus as the incoming user data and to ensure that the outgoing user data is encrypted and provided over the untrusted bus as encrypted outgoing data and to provide metadata associated with encrypted data transfers provided over the untrusted bus.

In one embodiment, the metadata indicates a request to receive encrypted data over the untrusted bus.

In one embodiment, the metadata indicates a request to store encrypted data provided over the untrusted bus.

In one embodiment, the request indicates a location of the encrypted data.

In one embodiment, the request indicates a location of a portion of the encrypted data.

In one embodiment, the request indicates a block number of storage storing the encrypted data.

In one embodiment, the request indicates a file name of the encrypted data.

In one embodiment, the request indicates a file name of a portion of the encrypted data.

In one embodiment, the request is derivable from the metadata.

In one embodiment, the metadata is signed. The metadata maybe signed digitally.

In one embodiment, the metadata comprises plain text.

In one embodiment, the step of providing metadata comprises transferring the metadata between the trusted data processing apparatus and the untrusted bus using a set of metadata registers.

In one embodiment, the step of providing metadata comprises transferring the metadata with less than a specified size using the metadata registers.

In one embodiment, the step of providing metadata comprises throttling transfer of the metadata to less than a specified rate using the metadata registers.

In one embodiment, the step of providing comprises storing metadata associated the request in an output set of metadata registers and storing metadata associated with encrypted data provided over the untrusted bus in response to the request in an input set of metadata registers.

In one embodiment, the step of providing comprises storing metadata associated a plurality of the requests in the output set of metadata registers and storing metadata associated with encrypted data provided over the untrusted bus in response to the requests in the input set of metadata registers.

In one embodiment, the method comprises authenticating encrypted data provided over the untrusted bus in response to the request.

In one embodiment, the method comprises authenticating encrypted data provided over the untrusted bus in response to the request using the metadata.

According to a third aspect, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates the main elements of a confidential domain of execution architecture;
Figure 2 illustrates the main elements of a trusted cryptographic unit of a confidential domain of execution architecture which utilises metadata according to one embodiment;
Figure 3 illustrates an initialisation message; and
Figure 4 illustrates the main elements of a trusted cryptographic unit of a confidential domain of execution architecture which utilises metadata according to one embodiment.

### DESCRIPTION OF THE EMBODIMENTS

### Overview

Before discussing the embodiments in any more detail, first an overview will be provided. As mentioned above, there is a need to provide improved protection of confidential data, particularly in cloud computing applications, or other distributed computing arrangements. For many applications, both the code sent to a remote computer (for example in the cloud) and the data to be remotely processed, as well as the output data generated from the remote processing operations needs to remain confidential. The data and code transported to and from the remote computer can readily be encrypted in order to preserve security and confidentiality. However, it is often necessary that a user needs to trust both the remote computer as well as its system administrators to maintain confidentiality.

System administrators may have access to data and code sent to the remote computers and untrusted and potentially malicious software may run on such remote computers and gain access to the data. Even if the data is encrypted, in many cases decrypted versions all the keys used in the encryption may be accessible within the remote computer in order to be used. Accordingly, a loss of confidentiality can occur if it is possible to access the processing of any unencrypted data within the remote computer or to output that data in an unencrypted form.

Accordingly, embodiments provide a hardware mechanism which is hardwired to create a trusted environment in which it is possible to ensure confidential execution of code and confidential processing of data despite operating in an otherwise untrusted environment. Embodiments provide, on a physical computing machine, one or more protected or trusted computing domains (referred to as a Confidential Domain of Execution (CDE)). Within the CDE confidential data is processed in unencrypted, plaintext form at the native computing speed achievable on the physical platform. Likewise, confidential code is executed in unencrypted, plaintext form at the native computing speed achievable on the physical platform. Any data flow from within the CDE to the outside (and potentially untrusted world or domain) is forcibly encrypted so that only authorized users can access it. Any reconfiguration of the CDE to allow different users to exploit its computing capabilities, including initialization after reset results in the whole contents of the CDE, including any memory and hardware state is forcibly cleared so that a new user of the CDE cannot find any residual traces of data or code that was processed by a previous user.

Accordingly, it can be seen that data (which may be code and/or user data) is in unencrypted form within the CDE or trusted domain to enable normal processing to occur within that trusted domain using data processing apparatus such as one or more processor cores, associated memory and required devices or peripherals. Information passing between the trusted domain and the outside world (untrusted domain) can only occur through a trusted cryptographic hardware unit (TCU) that enforces encryption and decryption any time data moves in or out of the CDE. The CDE and TCU are built using hardware that cannot be compromised using software (for example, a single chip is a possible implementation).

Sensitive data (or code) is shipped to the CDE in encrypted form and is decrypted once by the TCU when data is moved into the CDE. That unencrypted data or code is then stored it in the CDE random access memory (RAM) and processed or executed in unencrypted form within the CDE. Any resultant data is then transmitted back to the end user (or stored on a disk for later processing) in encrypted form as the TCU enforces encryption when any data leaves the CDE. Accordingly, all data transactions between the CDE and the outside world or untrusted domain can only occur through the TCU which performs decryption on all incoming data and encryption on all outgoing data. The TCU provides the only or sole interface with the CDE so that data cannot be accessed from within the CDE in any other way. Also, because the TCU is realized in hardware, it is not possible to prevent the TCU from performing this encryption and decryption so as to compromise the data within the CDE.

All the processing performed within the CDE runs at the native computing capability speed, without any need for encryption or decryption at each and every access to the RAM. As mentioned above, any attempt to output data from within the CDE causes forcibly encryption by the hardware, making it impossible to disclose information to the untrusted domain or environment, even in the presence of bugs in the software running within the CDE, or attempts to insert malicious pluggable hardware into the physical computing machine. Furthermore, when switching users using a CDE, all of the CDE contents are forcibly cleared and reset to an initial state. This ensures that no information leakage is possible when switching users that access the CDE.

Embodiments associate plain-text metadata with each encrypted data transfer occurring through the CDE input/output (I/O) channels. The CDE keeps performing the forcible encryption (on output) and decryption (on input) of all regular data being transferred through its I/O channel (or channels). Additionally, each transfer may be optionally associated with a constrained amount of metadata that is transferred in plain-text, in and out of the CDE. The metadata may specify an instruction such as an instruction to read or write encrypted data at a location outside of the CDE, in the untrusted environment. This seeks to enable the CDE to initiate requests to the enclosing untrusted environment and to receive responses from the untrusted environment, whilst retaining the forced encryption and decryption of the data involved in the request and response. For example, this allows the CDE to access a specific encrypted file (or merely a specific portion of a file) stored in the untrusted environment outside the CDE, among terabytes of encrypted files that are potentially accessible, because the CDE can specify the file name and/or location (and/or offset/ size of the transfer) in form of plaintext metadata associated with the request and the untrusted environment can then fetch the file and return it through the regular input channel where the file is decrypted upon entry. Likewise, the CDE can output an encrypted file (or merely overwrite a portion of it) by specifying as metadata the file name and/or location (and/or offset/size of the transfer) of where to store the data being output as forcibly encrypted data. The untrusted environment can then read the metadata, and properly store the encrypted content into the right file (or in the right portion of a huge file). If disk block number information is included in the metadata, the exchange of encrypted data can be made more fine-grained by performing file input and output on a block-by-block basis rather than on a whole-file basis. Such access would enable access to, for example, a user-encrypted database residing in the untrusted environment.

Furthermore, embodiments provide for more diverse communication with the outside world. For example, software running within the CDE might be willing to communicate with other CDEs, but which ones exactly may not be known in advance. Embodiments allow information to be conveyed about the destination of an (encrypted) data transfer initiated by the CDE, in collaborative scenarios in which such destination is not implicitly known. Similarly, embodiments enable injecting of data within the CDE in collaborative scenarios in which the source of such data may not be implicitly known, so the outside untrusted environment might add information about the source or sender of data in the metadata associated with a CDE input transfer.

The encryption and decryption algorithms to be used across the I/O channel(s) of a CDE split the encrypted data at clear separation points, which can then be used for access to a portion of the encrypted data from within the CDE. Specifically, the dataset to be accessed cannot have been encrypted in a single cipher operation configured in chained mode, otherwise it would be impossible to read and decrypt, or overwrite meaningfully, a portion of such data. For example, files can be individually encrypted, or a huge file can be encrypted in blocks, where each block is independently encrypted with its own initialization vector (IV), etc. Regardless, such difficulties can readily be addressed merely by picking a suitable encryption algorithm.

As the metadata associated with a CDE I/O transfer travels in plain-text, the CDE should be careful about how the metadata is used. If third party data from potentially untrusted sources is introduced into the CDE, then the CDE should handle such data in a controlled and defensive way. Also, it is possible that the CDE can leak information via the metadata associated to I/O transfers. Indeed, as metadata is typically written in clear-text, the CDE is dependent on the surrounding environment operation (and cannot rely on its own TCU) to ensure confidentiality of such metadata, i.e., when the CDE is embedded in a cloud data centre, the cloud provider must be trusted and so the data written should have a confidentiality level that is in line with that trust level.

Typically, the metadata is to be used merely to convey the minimum amount of information needed by the surrounding environment to properly handle and route it, such as: data location, file name, offset, size, disk block, etc. The actual content is still protected by enforced encryption by the CDE TCU as long as the user's software itself does not voluntarily leak information in the form of metadata. This could occur, if the user's software contains bugs or Trojan horses. However, even without such metadata the CDE design is also susceptible to such attacks because although all data output is encrypted, the rate of output could be used by a Trojan horse to leak information that could be observed by the environment. Therefore, although it is easier for a Trojan horse merely to write leaked information into clear-text metadata than it is to leak by varying the output rate, the confidentiality level is formally the same. Namely, the extent to which the CDE enhanced with plaintext metadata is protected from leakages through covert channels built via an active participation of the software deployed within the CDE itself is formally the same as arrangements without such metadata.

However, including metadata allows the communication of strictly limited data between the CDE and its surrounding cloud environment. The cloud environment needs to be trusted to handle such metadata in a confidential way. However, given that such metadata contains information about location (destination or source) of the actual data to be transferred, the confidentiality requirements applying to it are very weak, if any. Because the cloud environment could be compromised, the metadata input to the CDE can also be falsified, or the data blocks returned could be the wrong ones. The CDE needs therefore to be very careful of handling such metadata. However, the main advantage of this approach is that the surrounding cloud environment does not need to be trusted to keep real data confidential; it is still encrypted. It is only the metadata that needs to be treated confidentially by the cloud environment.

### Confidential Domain Of Execution

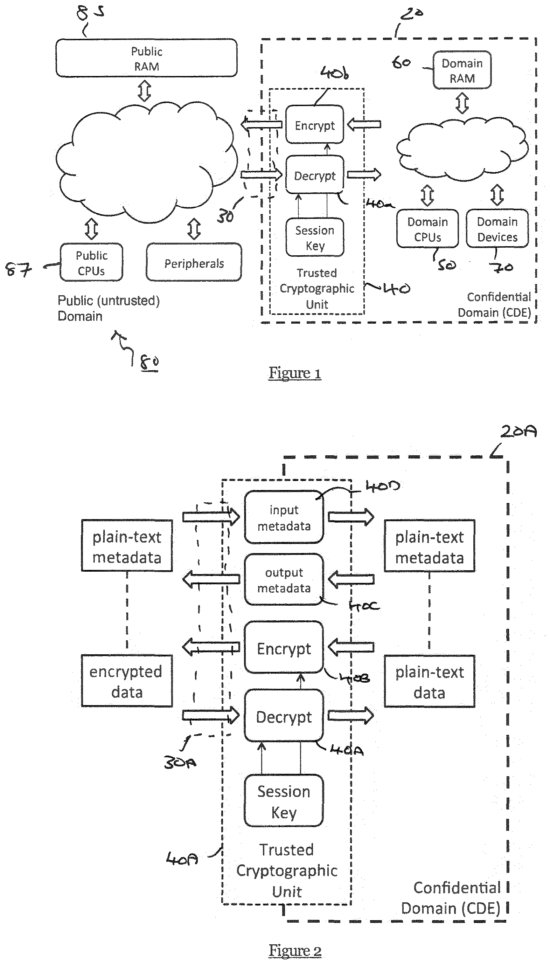

Figure 1 illustrates the main elements of the CDE architecture. The Confidential Domain of Execution 20 is a trusted domain which is part of a standard computer system which is, for example, mounted on a personal computer motherboard. The standard computer system controls the communication with the outside world or untrusted domain 80 and supports the operation and initialization of the CDE 20. The CDE 20 is typically contained entirely within a single hardware unit, for example being part of a single chip, and the only access lines 30 to and from the CDE 20 are through the TCU 40.

The TCU 40 is provided with built-in cryptographic material that is typically stored in a tamper-proof part of the chip, which enables confidential and trusted communication with it by potential users. The TCU 40 is designed and hardwired so as to never disclose this built-in cryptographic material to outside of the CDE 20. This enables potential users to send code and/or data confidentially to a specific CDE to be processed. Also, users may exploit this built-in material to send further cryptographic material useful for encrypting its own code and data confidentially to the CDE 20. For example, an asymmetric encryption key may be provided enabling fast encryption/ decryption of large amounts of data and/or code. Furthermore, the TCU 40 may optionally support verification of the received data and contents by users following cryptographic verification using, for example, digital signatures, as is explained in more detail below.

All incoming communication passes through decryption hardware 40A which is hardwired to decrypt the received data from the untrusted domain 80 and provides that unencrypted data to the trusted data processing apparatus within the CDE 20 which comprises of one or more processors 50, associated RAM 60 and devices 70. All data and code within the CDE 20 is processed in unencrypted form which avoids any delays that may otherwise occur when attempting to perform secure processing of code and/or data in encrypted form. Accordingly, it can be seen that the CDE 20 may provide a complete data processing apparatus or system comprising whatever resources may be required to support the processing required by the user. In this example, the CDE 20 is contained on a single chip that is mounted on an existing, standard motherboard running a complete standard operating system such as Windows, Linux or other operating system.

All data flowing out of the CDE 20 must pass through the encryption hardware 40B which is hardwired to forcibly encrypt the data before providing this to the untrusted domain 80. This ensures that only data in its encrypted form exists within the untrusted domain 80. By hardwiring the TCU 40 to perform decryption and encryption, and by only having the TCU interposed on the sole single interface between the trusted and untrusted domains, the ability to access or output data in unencrypted form is obviated.

### Metadata Initialisation

Figure 2 illustrates a CDE 20A (similar to the CDE 20 illustrated in Figure 1 above) where the System-on-Chip implementation is modified by adding one or more additional metadata registers 40C, 40D, that are programmed with the needed additional information when the CDE 20A initiates an I/O transfer operation.

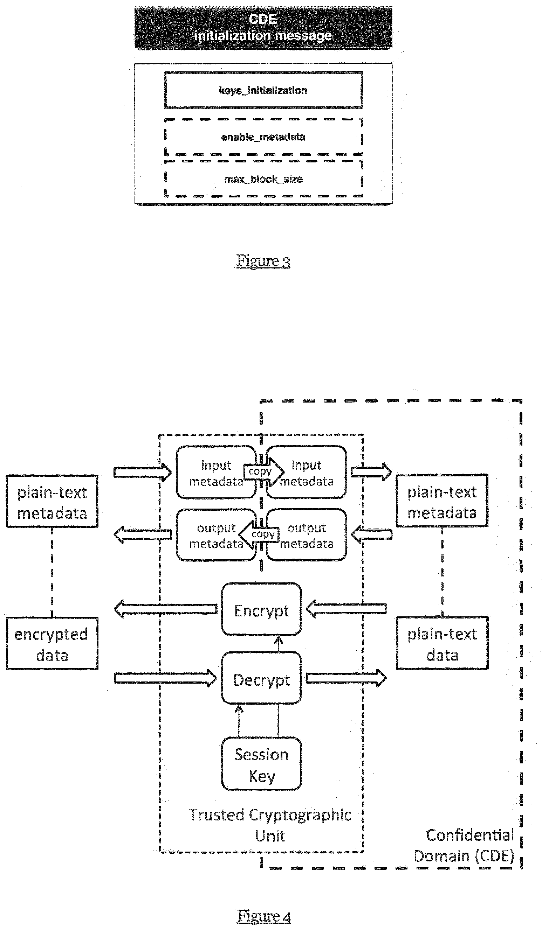

When the CDE 20A is initialized, an initialization message provided by the remote user client may include also information about whether or not to enable plain-text metadata associated to with regular encrypted transfers, as well as information about the maximum size of metadata allowed to be associated with each input/output transfer, as shown in Figure 3.

### Metadata Transfer

Physically, association of metadata information with the CDE 20A transfer may be done by adding additional registers 40C, 40D to be programmed within the CDE TCU 40A. For example, if a single input or output operation is programmed through a special DMA channel made available by the TCU 40A, in which the data segments and encryption parameters to use for the transfer are programmed, then additional registers may be used for the purpose of transferring metadata. Specifically, when performing an output operation, additional output metadata registers may be written by a CPU within the CDE 20A, and their contents may be made available into accessible registers to be read by the surrounding environment (either the same registers accessible from both sides, or distinct registers whose contents are copied by the TCU 40A as part of the transfer operation as illustrated in Figure 4), namely a public CPU of a system including one or more CDEs. Similarly, when programming an input operation towards the CDE 20A, the outside world, namely a public CPU, would write into the additional metadata registers the metadata that will be made available to the CPU(s) inside the CDE 20A by reading input metadata registers (again, same registers or distinct registers whose contents are copied).

By using a simple interface 30A based on the use of additional registers 40C, 40D to be explicitly read and written when initiating I/O data transfers in and out of the CDE 20A, the opportunities for possible malicious attacks that exploit the metadata is reduced to a minimum. Also, the size of these registers may be limited and the rate they can be updated limited in order to limit the rate at which information is output to limit any leaking.

In the case in which the CDE 20A initiates a request for an input transfer by sending to the surrounding environment the metadata necessary for retrieving the needed data, and the returned data is cryptographically associated with the requested metadata information (by means of a digital signature and/or by embedding the metadata directly within the encrypted input data stream), additional registers within the TCU 40A specify that the metadata verification process is enabled and the possible additional encryption parameters needed for the verification (e.g., additional metadata signature key). These options and parameters can be programmed through the initialisation message that the user sends to the CDE 20A when it initialises it, and may be stored within internal registers of the TCU 40A. Also, whenever the CDE 20A needs to verify that returned input data matches the metadata sent out in an input transfer request, then the TCU 40A itself may store the metadata sent out in an output request within additional appropriate TCU registers, and later retrieve their contents to perform the verification against the (optionally signed) metadata coming along with the input data transfer.

The metadata may be provided on a control channel of the untrusted bus, whilst the encrypted data which the metadata is associated is provided on a data channel, or the metadata maybe provided as part of a packet transmitted on the untrusted bus or may be associated in other ways.

### Metadata Transfer - Multiple Requests

In case multiple pending requests of such type are desirable (e.g., for enhanced performance), then multiple copies of such registers maybe provided, and an additional operation identifier can be added to be specified on the input and output requests, so as to match correctly input data transfers against the correct in-TCU stored metadata information to be verified.

### Metadata Signing

The CDE 20A can, optionally, digitally sign the metadata being passed out of the CDE 20A and then the CDE 20A may verify that the original signed request is returned as part of the metadata, before accepting an input data transfer. Thus the CDE 20A can verify that the response is indeed for something that it asked for. Alternatively, or in addition, if the encrypted data returned is self-identifying, the CDE 20A can verify that it is indeed the correct data that has been returned. Self-identification can be done, for example, by adding a file identifier and/or the block number to every block stored in the dataset.

Optionally, the CDE 20A can also require that the environment signs the metadata, so that the CDE 20A can verify that the metadata indeed is produced by the cloud environment. This would provide protection against an attacker who has partially compromised the cloud environment and gained access to the CDE 20A, but where the attacker has not gained access to the private keys of the cloud environment and thus is unable to sign on behalf of the cloud environment.

### Metadata Encryption

On metadata output, the CDE 20A could also optionally encrypt the metadata using a public key of the environment. This would further protect the metadata as compromising it not only requires a compromise of the cloud environment that allows access to the CDE 20 A but also access to the private key of the cloud environment; this maybe much more difficult.

It is straightforward to extend the CDE 20A initialisation protocol in a way that allows the remote CDE user/ owner to specify the additional options and associated parameters (e.g., additional signature or encryption key material needed to handle metadata) needed to support the extensions described above.

It can be seen that embodiments enable a CDE access to user-encrypted databases or other files that are under the control of another entity, specifically a cloud provider. Thus the user can run a CDE in the cloud with full confidentiality of its own data, while allowing the data that it has stored at the cloud provider to enter and leave the CDE.

Allowing a CDE to access databases at the cloud provider enables a much wider application of CDE's. However, in many cases, the CDE has its own core data that the CDE keeps confidential and this approach allows the CDE to share the confidentiality responsibility for data that is shared.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A secure data processing apparatus operable to securely process user data provided by a user, said secure data processing apparatus comprising:
a trusted domain (20) comprising a trusted bus coupled with a trusted data processing apparatus operable to process incoming user data received over said trusted bus and to generate outgoing user data; **characterised in that** the trusted domain controller comprises:
cryptographic logic (40) coupling said trusted bus with an untrusted bus (30) of an untrusted domain (80), said cryptographic logic (40) being operable to ensure that encrypted incoming user data received over said untrusted bus (30) is decrypted and provided over said trusted bus as said incoming user data and to ensure that outgoing user data is encrypted and provided over said untrusted bus (30) as encrypted outgoing data; and
metadata logic (40a, 40b) coupling said trusted bus with said untrusted bus (30) , said metadata logic being operable to provide metadata associated with encrypted data transfers provided over said untrusted bus.

2. The secure data processing apparatus of claim 1, wherein said metadata indicates at least one of: a request to receive encrypted data over said untrusted bus; and a request to store encrypted data provided over said untrusted bus.

3. The secure data processing apparatus of claim 1 or 2, wherein said request indicates at least one of: a location of said encrypted data; a location of a portion of said encrypted data; a block number of storage storing said encrypted data; a file name of said encrypted data; and a file name of a portion of said encrypted data.

4. The secure data processing apparatus of any preceding claim, wherein said request is derivable from said metadata.

5. The secure data processing apparatus of any preceding claim, wherein said metadata is signed.

6. The secure data processing apparatus of any preceding claim, wherein said metadata comprises plain text.

7. The secure data processing apparatus of any preceding claim, wherein said metadata logic comprises a set of metadata registers (40a, 40b) operable to transfer said metadata between said trusted data processing apparatus and said untrusted bus (30).

8. The secure data processing apparatus of claim 7, wherein said metadata registers (40a, 40b) are operable to transfer said metadata having less than a specified size.

9. The secure data processing apparatus of claim 7 or 8, wherein said metadata registers are operable to throttle transfer of said metadata to less than a specified rate.

10. The secure data processing apparatus of any one of claims 7 to 9, wherein said set of metadata registers comprises an output set of metadata registers (40b) operable to store metadata associated said request and an input set of metadata registers (40a) operable to store metadata associated with encrypted data provided over said untrusted bus in response to said request.

11. The secure data processing apparatus of claim 10, wherein said output set of metadata registers are operable to store metadata associated a plurality of said requests and said input set of metadata registers are operable to store metadata associated with encrypted data provided over said untrusted bus in response to said requests.

12. The secure data processing apparatus of any preceding claim, wherein said trusted domain controller (50) is operable to authenticate encrypted data provided over said untrusted bus in response to said request.

13. The secure data processing apparatus of any preceding claim, wherein said trusted domain controller (50) is operable to authenticate encrypted data provided over said untrusted bus in response to said request using said metadata.

14. A secure data processing method for securely processing user data provided by a user, said method comprising:
processing incoming user data received over said trusted bus and generating outgoing user data,
**characterised in that** the method further comprises the step of: coupling said trusted bus with an untrusted bus of an untrusted domain using a trusted domain controller to ensure that encrypted incoming user data received over said untrusted bus is decrypted and provided over said trusted bus as said incoming user data and to ensure that said outgoing user data is encrypted and provided over said untrusted bus as encrypted outgoing data and to provide metadata associated with encrypted data transfers provided over said untrusted bus.

15. A computer program product operable, when executed on a computer, to perform the method steps of claim 14.

## Patentansprüche

1. Eine sichere Datenverarbeitungseinrichtung, die dazu betrieben werden kann, von einem Benutzer bereitgestellte Benutzerdaten sicher zu verarbeiten, wobei die sichere Datenverarbeitungseinrichtung Folgendes umfasst:
eine vertrauenswürdige Domäne (20), die einen vertrauenswürdigen Bus umfasst, der mit einer vertrauenswürdigen Datenverarbeitungseinrichtung gekoppelt ist, die dazu betrieben werden kann, eingehende Benutzerdaten zu verarbeiten, die über den vertrauenswürdigen Bus empfangen werden, und ausgehende Benutzerdaten zu generieren; **dadurch gekennzeichnet, dass** die vertrauenswürdige Domänensteuerung Folgendes umfasst:
kryptografische Logik (14), die den vertrauenswürdigen Bus mit einem nicht vertrauenswürdigen Bus (30) einer nicht vertrauenswürdigen Domäne (80) koppelt, wobei die kryptografische Logik (40) dazu betrieben werden kann, sicherzustellen, dass verschlüsselte eingehende Benutzerdaten, die über den nicht vertrauenswürdigen Bus (30) empfangen werden, entschlüsselt und über den vertrauenswürdigen Bus als die eingehenden Benutzerdaten bereitgestellt werden, und sicherzustellen, dass ausgehende Benutzerdaten verschlüsselt und über den nicht vertrauenswürdigen Bus (30) als verschlüsselte ausgehende Daten bereitgestellt werden; und
Metadatenlogik (40a, 40b), die den vertrauenswürdigen Bus mit dem nicht vertrauenswürdigen Bus (30) koppelt, wobei die Metadatenlogik dazu betrieben werden kann, Metadaten bereitzustellen, die mit verschlüsselten Datenübertragungen assoziiert sind, die über den nicht vertrauenswürdigen Bus bereitgestellt werden.

2. Sichere Dateiverarbeitungseinrichtung nach Anspruch 1, wobei die Metadaten mindestens einen der folgenden Punkte angibt: eine Anforderung zum Empfangen verschlüsselter Daten über den nicht vertrauenswürdigen Bus; und eine Anforderung zum Speichern verschlüsselter Daten, die über den nicht vertrauenswürdigen Bus bereitgestellt werden.

3. Sichere Dateiverarbeitungseinrichtung nach Anspruch 1 oder 2, wobei die Anforderung mindestens einen der folgenden Punkte angibt: einen Ort der verschlüsselten Daten; einen Ort eines Teils der verschlüsselten Daten; eine Blocknummer der Speicherung der verschlüsselten Daten; einen Dateinamen der verschlüsselten Daten; und einen Dateinamen eines Teils der verschlüsselten Daten,

4. Sichere Dateiverarbeitungseinrichtung nach den vorhergehenden Ansprüchen, wobei die Anforderung aus den Metadaten ableitbar ist.

5. Sichere Dateiverarbeitungseinrichtung nach den vorhergehenden Ansprüchen, wobei die Metadaten signiert sind.

6. Sichere Dateiverarbeitungseinrichtung nach den vorhergehenden Ansprüchen, wobei die Metadaten Klartext enthalten.

7. Sichere Datenverarbeitungseinrichtung nach den vorhergehenden Ansprüchen, wobei die Metadatenlogik einen Satz von Metadatenregistern (40a, 40b) umfasst, die dazu betrieben werden können, die Metadaten zwischen der vertrauenswürdigen Datenverarbeitungseinrichtung und dem nicht vertrauenswürdigen Bus zu übertragen.

8. Sichere Datenverarbeitungseinrichtung nach Anspruch 7, wobei die Metadatenregister (40a, 40b) dazu betrieben werden können, die Metadaten mit weniger als einer bestimmten Größe zu übertragen.

9. Sichere Datenverarbeitungseinrichtung nach Anspruch 7 oder 8, wobei die Metadatenregister dazu betrieben werden können, die Übertragung der Metadaten auf weniger als eine bestimmte Geschwindigkeit zu drosseln.

10. Sichere Datenverarbeitungseinrichtung nach jedem der Ansprüche 7 bis 9, wobei der Satz von Metadatenregistern einen Ausgabesatz von Metadatenregistern (40b) enthält, die dazu betrieben werden können, Metadaten zu speichern, die mit der Anforderung assoziiert sind, und einen Eingabesatz von Metadatenregistern (40a) enthält, die dazu betrieben werden können, Metadaten zu speichern, die mit verschlüsselten Daten assoziiert sind, die als Reaktion auf die Anforderung über den nicht vertrauenswürdigen Bus bereitgestellt werden.

11. Sichere Datenverarbeitungseinrichtung nach Anspruch 10, wobei der Ausgabesatz von Metadatenregistern dazu betrieben werden kann, Metadaten zu speichern, die mit einer Vielzahl der Anforderungen assoziiert sind, und der Eingabesatz von Metadatenregistern dazu betrieben werden kann, Metadaten zu speichern, die mit verschlüsselten Daten assoziiert sind, die als Reaktion auf die Anforderungen über den nicht vertrauenswürdigen Bus bereitgestellt werden.

12. Sichere Datenverarbeitungseinrichtung nach den vorhergehenden Ansprüchen, wobei die vertrauenswürdige Domänensteuerung (50) dazu betrieben werden kann, verschlüsselte Daten zu authentifizieren, die über den nicht vertrauenswürdigen Bus als Reaktion auf die Anforderung bereitgestellt werden.

13. Sichere Datenverarbeitungseinrichtung nach den vorhergehenden Ansprüchen, wobei die vertrauenswürdige Domänensteuerung (50) dazu betrieben werden kann, verschlüsselte Daten zu authentifizieren, die über den nicht vertrauenswürdigen Bus als Reaktion auf die Anforderung mittels der Metadaten bereitgestellt werden.

14. Sicheres Datenverarbeitungsverfahren zum sicheren Verarbeiten von Benutzerdaten, die von einem Benutzer bereitgestellt werden, wobei das Verfahren Folgendes umfasst:
Verarbeiten eingehender Benutzerdaten, die über den vertrauenswürdigen Bus empfangen werden, und Generieren von ausgehenden Benutzerdaten **dadurch gekennzeichnet, dass** das Verfahren ferner den Folgenden Schritt umfasst:
Koppeln des vertrauenswürdigen Busses mit einem nicht vertrauenswürdigen Bus einer nicht vertrauenswürdigen Domäne mittels einer vertrauenswürdigen Domänensteuerung, um sicherzustellen, dass verschlüsselte eingehende Benutzerdaten, die über den nicht vertrauenswürdigen Bus empfangen werden, entschlüsselt und über den vertrauenswürdigen Bus als eingehende Benutzerdaten bereitgestellt werden, und sicherzustellen, dass die ausgehenden Benutzerdaten verschlüsselt und über den nicht vertrauenswürdigen Bus als verschlüsselte ausgehende Daten bereitgestellt werden, und Metadaten bereitzustellen, die mit verschlüsselten Datenübertragungen assoziiert sind, die über den nicht vertrauenswürdigen Bus bereitgestellt werden.

15. Computerprogrammprodukt, das dazu betrieben werden kann, bei Ausführung auf einem Computer die Verfahrensschritte nach Anspruch 14 auszuführen.

## Revendications

1. Appareil de traitement sécurisé de données utilisable pour traiter de façon sécurisée des données utilisateur fournies par un utilisateur, ledit appareil de traitement sécurisé de données comprenant :
un domaine de confiance (20) comprenant un bus de confiance couplé à un appareil de traitement de données de confiance utilisable pour traiter des données utilisateur entrantes reçues sur ledit bus de confiance et pour générer des données utilisateur sortantes ;
**caractérisé en ce que** le contrôleur de domaine de confiance comprend :
une logique cryptographique (40) couplant ledit bus de confiance à un bus sans confiance (30) d'un domaine sans confiance (80), ladite logique cryptographique (40) étant utilisable pour faire en sorte que des données utilisateur entrantes chiffrées reçues sur ledit bus sans confiance (30) soient déchiffrées et fournies sur ledit bus de confiance comme lesdites données utilisateur entrantes et pour faire en sorte que des données utilisateur sortantes soient chiffrées et fournies sur ledit bus sans confiance (30) comme des données sortantes chiffrées ; et
une logique de métadonnées (40a, 40b) couplant ledit bus de confiance audit bus sans confiance (30), ladite logique de métadonnées étant utilisable pour fournir des métadonnées associées à des transferts de données chiffrées fournis sur ledit bus sans confiance.

2. Appareil de traitement sécurisé de données selon la revendication 1, dans lequel lesdites métadonnées indiquent : une requête de réception de données chiffrées sur ledit bus sans confiance et/ou une requête de stockage de données chiffrées fournies sur ledit bus sans confiance.

3. Appareil de traitement sécurisé de données selon la revendication 1 ou 2, dans lequel ladite requête indique : un emplacement desdites données chiffrées et/ou un emplacement d'une partie desdites données chiffrées et/ou un numéro de bloc de stockage stockant lesdites données chiffrées et/ou un nom de fichier desdites données chiffrées et/ou un nom de fichier d'une partie desdites données chiffrées.

4. Appareil de traitement sécurisé de données selon l'une quelconque des revendications précédentes, dans lequel ladite requête est susceptible d'être obtenue à partir desdites métadonnées.

5. Appareil de traitement sécurisé de données selon l'une quelconque des revendications précédentes, dans lequel lesdites métadonnées sont signées.

6. Appareil de traitement sécurisé de données selon l'une quelconque des revendications précédentes, dans lequel lesdites métadonnées comprennent du texte en clair.

7. Appareil de traitement sécurisé de données selon l'une quelconque des revendications précédentes, dans lequel ladite logique de métadonnées comprend un jeu de registres de métadonnées (40a, 40b) utilisable pour transférer lesdites métadonnées entre ledit appareil de traitement sécurisé de données et ledit bus sans confiance (30).

8. Appareil de traitement sécurisé de données selon la revendication 7, dans lequel lesdits registres de métadonnées (40a, 40b) sont utilisables pour transférer lesdites métadonnées d'une taille inférieure à une taille stipulée.

9. Appareil de traitement sécurisé de données selon la revendication 7 ou 8, dans lequel lesdits registres de métadonnées sont utilisables pour brider le transfert desdites métadonnées à un débit inférieur à un débit stipulé.

10. Appareil de traitement sécurisé de données selon l'une quelconque des revendications 7 à 9, dans lequel ledit jeu de registres de métadonnées comprend un jeu de sortie de registres de métadonnées (40b) utilisable pour stocker des métadonnées associées à ladite requête et un jeu d'entrée de registres de métadonnées (40a) utilisable pour stocker des métadonnées associées à des données chiffrées fournies sur ledit bus sans confiance en réponse à ladite requête.

11. Appareil de traitement sécurisé de données selon la revendication 10, dans lequel ledit jeu de sortie de registres de métadonnées est utilisable pour stocker des métadonnées associées à une pluralité desdites requêtes et ledit jeu d'entrée de registres de métadonnées est utilisable pour stocker des métadonnées associées à des données chiffrées fournies sur ledit bus sans confiance en réponse auxdites requêtes.

12. Appareil de traitement sécurisé de données selon l'une quelconque des revendications précédentes, dans lequel ledit contrôleur de domaine de confiance (50) est utilisable pour authentifier des données chiffrées fournies sur ledit bus sans confiance en réponse à ladite requête.

13. Appareil de traitement sécurisé de données selon l'une quelconque des revendications précédentes, dans lequel ledit contrôleur de domaine de confiance (50) est utilisable pour authentifier des données chiffrées fournies sur ledit bus sans confiance en réponse à ladite requête à l'aide desdites métadonnées.

14. Procédé de traitement sécurisé de données permettant le traitement sécurisé de données utilisateur fournies par un utilisateur, ledit procédé comprenant :
le traitement de données utilisateur entrantes reçues sur ledit bus de confiance et la génération de données utilisateur sortantes,
le procédé étant **caractérisé en ce qu'**il comprend en outre l'étape suivante :
le couplage dudit bus de confiance à un bus sans confiance d'un domaine sans confiance à l'aide d'un contrôleur de domaine de confiance pour faire en sorte que des données utilisateur entrantes chiffrées reçues sur ledit bus sans confiance soient déchiffrées et fournies sur ledit bus de confiance comme lesdites données utilisateur entrantes et pour faire en sorte que lesdites données utilisateur sortantes soient chiffrées et fournies sur ledit bus sans confiance comme des données sortantes chiffrées, et pour fournir des métadonnées associées à des transferts de données chiffrées fournis sur ledit bus sans confiance.

15. Produit-programme d'ordinateur utilisable, lorsqu'il est exécuté sur un ordinateur, pour mettre en oeuvre les étapes de procédé de la revendication 14.
